Europäisches Patentamt

European Patent Office

Office européen des brevets

(19)

(11) Numéro de publication : **0 291 397 B1**

(12)

# FASCICULE DE BREVET EUROPEEN

(45) Date de publication du fascicule du brevet :
**19.06.91 Bulletin 91/25**

(51) Int. Cl.$^5$ : **B60H 1/00**

(21) Numéro de dépôt : **88401108.1**

(22) Date de dépôt : **06.05.88**

(54) **Corps d'appareil rigide pour installation de chauffage et/ou de climatisation pour véhicule automobile.**

(30) Priorité : **12.05.87 FR 8706668**

(43) Date de publication de la demande :
**17.11.88 Bulletin 88/46**

(45) Mention de la délivrance du brevet :
**19.06.91 Bulletin 91/25**

(84) Etats contractants désignés :
**DE ES IT**

(56) Documents cités :
**EP-A- 0 091 618**
**EP-A- 0 108 522**
**DE-A- 3 143 503**
**FR-A- 1 439 055**
**FR-A- 2 473 430**
**US-A- 4 223 754**

(73) Titulaire : **VALEO THERMIQUE HABITACLE**
**8, rue Louis-Lormand, La Verriere**
**F-78320 Le Mesnil-Saint-Denis (FR)**

(72) Inventeur : **Danieau, Jacques**
**28, Allée du Hameau Fleuri**
**F-78590 Noisy-le-Roi (FR)**

(74) Mandataire : **Lemaire, Marc**
**VALEO Service Propriété Industrielle 30, rue**
**Blanqui**
**F-93406 Saint-Ouen Cédex (FR)**

## Description

L'invention concerne un corps d'appareil pour installation de chauffage et/ou de climatisation de l'hatibacle d'un véhicule automobile.

On connaît par exemple par FR-A-2 473 430 un tel corps d'appareil comprenant un boîtier contenant des organes de traitement de l'air à envoyer à des premières buses de sortie dirigées vers l'habitacle et à des secondes buses de sortie dirigées sur le pare-brise, une partie des premières buses de sortie étant liée de façon rigide et monobloc au boîtier. Dans ce boîtier, les organes de traitement de l'air sont notamment un ventilateur, un radiateur pour le chauffage de l'air et des volets de mixage et de distribution de l'air.

Ce corps d'appareil connu ne comporte par de buses de sortie venant dans les régions latérales de l'habitacle, ni de buses de sortie dirigées sur le pare-brise pour le dégivrage et le désembuage de celui-ci.

Il est donc nécessaire de prévoir de telles buses sur d'autres composants du véhicule, tels que la planche de bord par exemple.

Ainsi, après montage du corps d'appareil et de la planche de bord sur le véhicule, les buses disposées sur la planche de bord doivent être raccordées au corps d'appareil par des canalisations souples, et cela sur la chaîne de montage du véhicule.

Cette manipulation est longue et peu aisée car les canalisations souples sont souvent difficiles à mettre en place en raison du manque d'espace disponible entre le corps d'appareil et la planche de bord.

En outre les canalisations, de par leur souplesse, peuvent être en contact avec certains éléments du véhicule, contact qui, lors du fonctionnement dudit véhicule, peut être la source de chocs répétés desdites canalisations contre lesdits éléments en générant des bruits nuisibles au confort du conducteur.

De plus, suite à ces chocs répétés, les canalisations souples peuvent être amenées à être percées et ainsi perdre une partie de leurs performances en perturbant le bon fonctionnement de l'installation.

Le but de l'invention est de remédier à ces inconvénients et de simplifier le montage de l'installation de chauffage et/ou de climatisation dans le véhicule, tout en permettant de garantir le bon fonctionnement de l'installation et en évitant les vibrations.

Ce résultat est obtenu, selon l'invention, en ce que le corps d'appareil comprend en outre, lié de façon rigide et monobloc au boîtier, d'autres premières buses de sortie destinées à venir dans les régions latérales de l'habitacle, des secondes buses de sortie et des moyens de canalisation de l'air entre ledit boîtier et lesdites buses, l'ensemble ainsi formé étant rigide et monobloc.

Le corps d'appareil, selon l'invention, s'étend donc sur la majeure partie de la largeur de l'habitacle du véhicule.

Grâce à la rigidité de l'ensemble, le corps d'appareil peut remplir en outre la fonction de support pour d'autres éléments du véhicule.

Ainsi, le corps d'appareil peut comprendre des moyens de fixation pour des éléments de style du véhicule, par exemple la planche du bord et son tableau.

On peut également prévoir que le corps d'appareil serve à supporter des instruments de bord et organes de commande du véhicule, des connecteurs électriques et/ou des fils de liaison pour ceux-ci ainsi que tous autres éléments aptes à être disposés sur ou au voisinage du corps d'appareil et/ou de la planche de bord.

Ainsi, l'esthétique d'un même véhicule de base peut varier dans le temps par le changement des éléments de style, et/ou l'équipement de bord peut varier d'un modèle à l'autre d'une même gamme, sans que le corps d'appareil ni son montage en soient affectés.

D'autres caractéristiques et avantages de l'invention ressortiront de la description détaillée ci-après et des dessins annexés dans lesquels :
  – la figure 1 est une vue en perspective d'un corps d'appareil selon l'invention, vu du côté tourné vers l'habitacle du véhicule, des éléments de style prêts à être fixés sur le corps d'appareil étant partiellement représentés ;
  – la figure 2 est une vue en perspective du corps d'appareil de la figure 1, vu du côté tourné vers le compartiment moteur du véhicule ;
  – la figure 3 est une vue schématique en coupe selon le plan longitudinal médian du véhicule, montrant une variante du corps d'appareil de la figure 1 à l'état monté et des éléments voisins de ce corps d'appareil.

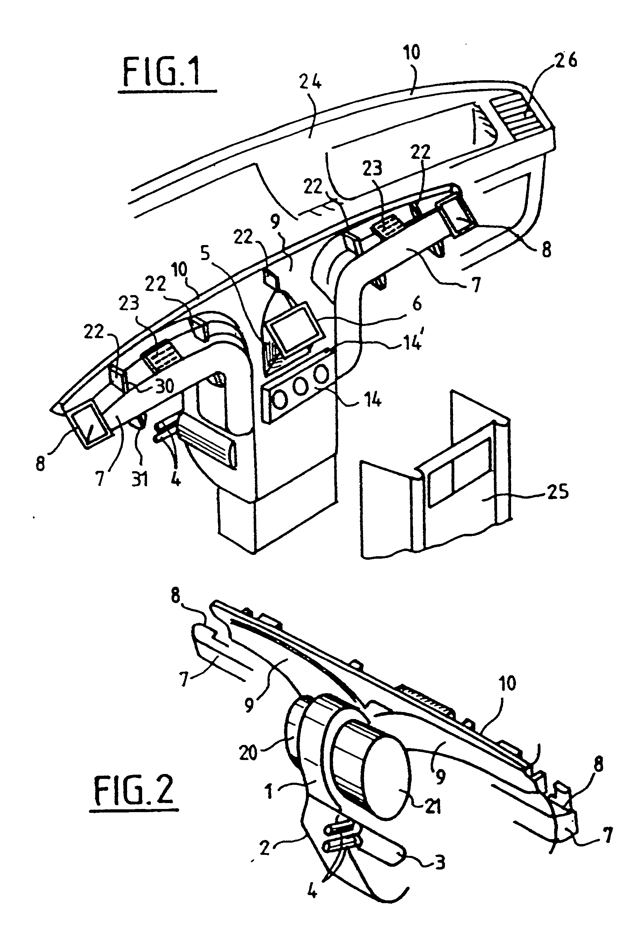

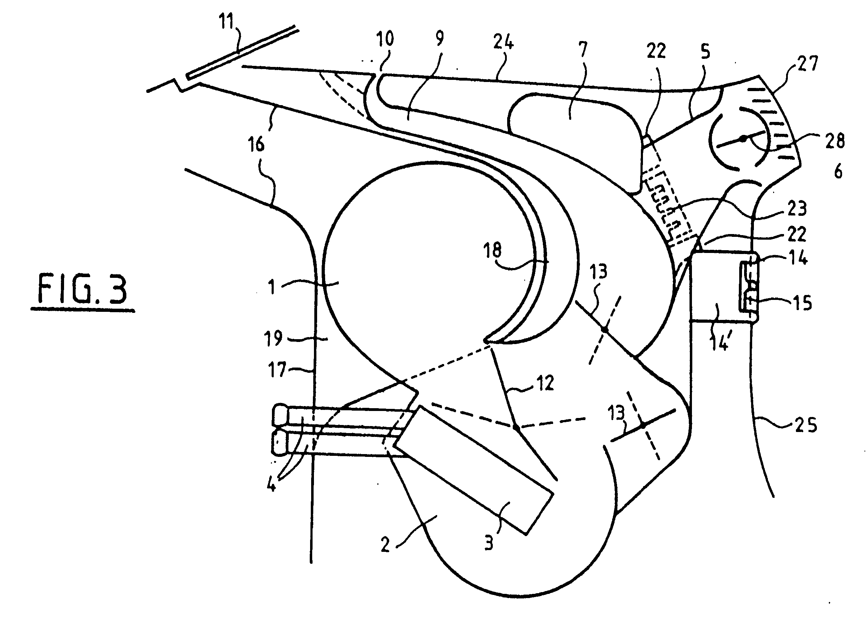

Le corps d'appareil représenté aux figures 1 et 2 et celui représenté à la figure 3 ne diffèrent que par des détails de construction et leurs éléments sont désignés par les mêmes numéros de référence. La description ci-après s'applique indifféremment aux deux.

Le corps d'appareil comprend un boîtier présentant une région supérieure 1 contenant un ventilateur (non représenté) et une région inférieure 2 abritant un radiateur de chauffage 3 muni de deux raccords d'entrée et de sortie 4 pour un fluide caloporteur qui peut être le liquide de refroidissement du moteur thermique du véhicule, ainsi que des volets de mixage 12 et de distribution de l'air 13.

Du boîtier partent une canalisation rigide centrale 5 débouchant vers l'habitacle par une ouverture ou buse de sortie centrale d'air 6, des canalisations rigides latérales 7 débouchant par des ouvertures ou buses de sortie d'air latérales 8 situées dans les parties latérales de l'habitacle et des canalisations rigides 9 aboutissant à des buses 10 de sortie d'air vers le pare-brise 11. Ici les buses 10 sont une seule et unique buse parcourant la base du pare-brise. L'ensemble des buses et des canalisations forme ainsi un ensemble rigide et monobloc avec le boîtier et constitue de ce fait un corps d'appareil rigide et monobloc dans son ensemble.

De façon classique, un volet de mixage pivotant 12 règle la fraction du débit d'air sortant du ventilateur qui traverse le radiateur 3, et des volets de distribution 13 commandent l'entrée des canalisations menant vers les buses de sortie. Les volets 12 et 13 sont représentés, à la figure 3, en trait plein dans une de leurs positions extrêmes, et en traits interrompus dans l'autre position extrême.

Afin de commander ces divers volets, il est prévu un tableau de commande 14 comportant des boutons de réglage 15. Ce tableau de commande est placé et fixé dans un support 14' prévu dans la façade du corps d'appareil, ici sur le boîtier, et fait saillie vers l'habitacle par rapport au corps d'appareil.

Le corps d'appareil est fixé par des moyens classiques, non représentés, sur la cloison 16 séparant l'habitacle et le compartiment moteur du véhicule.

Le corps d'appareil est muni d'éléments de fixation 22 pour les éléments de style, ainsi que de connecteurs 23 pour les organes de commande et les instruments de bord. Le corps d'appareil peut également supporter des fils de liaison électrique ainsi que tous autres éléments aptes à être disposés sur et/ou au voisinage du corps d'appareil et/ou des éléments de style.

Ainsi les éléments de fixation 22 et plus particulièrement leurs parties 30 et 31 servent à la fixation de la planche de bord 24.

En plus de la planche de bord 24, il est prévu une façade médiane inférieure 25 qui vienne se fixer sur le corps d'appareil par des moyens non représentés et en dissimulent la majeure partie, laissant apparent le tableau de commande 14. L'élément 24 présente des ouvertures 26 munies de grilles venant en regard des buses latérales 8 et une ouverture 27 munie d'une grille venant en regard de la buse centrale 6. Un volet de fermeture est prévu pour chaque buse de sortie à partir de l'élément 24.

Il peut être aussi prévu que les buses 6 et 8 comportent, elles, les grilles et les volets de fermeture, ces grilles venant, lors de l'assemblage avec la planche de bord, en concordance avec des ouvertures prévues dans celle-ci.

En outre, comme visible à la figure 3, la planche de bord 24 comporte une ouverture en concordance avec la buse 10, ouverture qui peut être munie de grille ou, comme décrit précédemment pour les buses 6 et 8, la buse 10 peut être pourvue d'une grille.

Les connecteurs 23 sont utilisés pour le raccordement des installations de commande, et/ou des instruments de bord tels que le tableau de bord par exemple et/ou de tout autre élément apte à être disposé sur ou au voisinage du corps d'appareil et/ou de la planche de bord, tel que par exemple un moyen d'éclairage d'un compartiment appelé plus communément boîte à gants.

Dans l'exemple décrit, il est prévu deux connecteurs, situés symétriquement par rapport à un plan médian se situant dans le plan de symétrie du corps d'appareil. Ainsi cette disposition permet le raccordement pour une conduite disposée soit à droite, soit à gauche.

De même, le corps d'appareil selon l'invention peut ne pas exercer nécessairement la fonction accessoire de support pour d'autres éléments.

L'invention s'applique aussi bien à une installation de climatisation qu'à une installation de chauffage et de ventilation comme décrit. A cet effet, un évaporateur peut être prévu par exemple en aval du ventilateur.

**Revendications**

1. Corps d'appareil pour installation de chauffage et/ou de climatisation de l'habitacle d'un véhicule automobile, comprenant un boîtier contenant des organes de traitement (3, 12, 13) de l'air à envoyer à des premières buses de sortie (6, 8) dirigées vers l'habitacle et à des secondes buses de sortie (10) dirigées sur le pare-brise (5), une partie (6) des premières buses de sortie étant liées de façon rigide et monobloc au boîtier, caractérisé en ce qu'il comprend en outre, liés de façon rigide et monobloc au boîtier, d'autres premières buses de sortie (8) destinées à venir dans les régions latérales de l'habitacle, des secondes buses de sortie (10) et des moyens (7, 9) de canalisation de l'air entre ledit boîtier et lesdites buses, l'ensemble ainsi formé étant rigide et monobloc.

2. Corps d'appareil selon la revendication 1, caractérisé en ce qu'il sert de support pour des éléments (14, 24, 25) du véhicule.

3. Corps d'appareil selon la revendication 1 ou 2, caractérisé en ce qu'il comprend des moyens de fixation (22) pour des éléments de style (24) du véhicule.

4. Corps d'appareil selon la revendication 2 ou 3, caractérisé en ce que les moyens de fixation (22) sont situés sur les moyens de canalisation (7, 9).

5. Corps d'appareil selon l'une des revendications précédentes, caractérisé en ce qu'il porte des connecteurs électriques (23).

6. Corps d'appareil selon la revendication 5, caractérisé en ce que les connecteurs sont utilisés pour le raccordement d'éléments aptes à être disposés sur et/ou au voisinage du corps d'appareil et/ou des éléments de style (24).

7. Corps d'appareil selon la revendication 5, caractérisé en ce que les connecteurs (23) sont disposés symétriquement par rapport au plan de symétrie verticale du corps d'appareil.

8. Corps d'appareil selon l'une des revendications précédentes, caractérisé en ce qu'il porte un support (14') pour le tableau de commande (14).

## Ansprüche

1. Körper für Heizungs- und/oder Klimaanlage für die Kabine eines Kraftfahrzeugs, enthaltend ein Gehäuse mit Organen (3, 12, 13) zur Aufbereitung der Luft, die den ersten Austrittsdüsen (6, 8) zugeleitet werden soll, welche der Kabine zugewandt sind, sowie zweiten Austrittsdüsen (10), die auf die Windschutzscheibe (5) gerichtet sind, wobei ein Teil (6) der ersten Austrittsdüsen starr und aus einem Stück mit dem Gehäuse verbunden sind, **da durch gekennzeichnet,** daß er außerdem, starr und aus einem Stück mit dem Gehäuse verbunden, weitere erste Austrittsdüsen (8), die in den seitlichen Teilen der Kabine austreten, zweite Austrittsdüsen (10) sowie Mittel (7, 9) zur Kanalisation der Luft zwischen dem genannten Gehäuse und den genannten Düsen enthält, so daß die daraus gebildete Einheit starr ist und aus einem Stück besteht.

2. Körper nach Anspruch 1, **dadurch gekennzeichnet,** daß er als Stütze für Elemente (14, 24, 25) des Fahrzeugs dient.

3. Körper nach Anspruch 1 oder 2, **dadurch gekennzeichnet,** daß er Befestigungsmittel (22) für Stilelemente (24) des Fahrzeugs aufweist.

4. Körper nach Anspruch 2 oder 3, **dadurch gekennzeichnet,** daß die Befestigungsmittel (22) an den Kanalisationsmitteln (7, 9) angeordnet sind.

5. Körper nach einem der vorherigen Ansprüche, **dadurch gekennzeichnet,** daß er elektrische Verbinder (23) aufweist.

6. Körper nach Anspruch 5, **dadurch gekennzeichnet,** daß die Verbinder für den Anschluß von Elementen verwendet werden, die an dem und/oder in Nähe des Körper(s) und/oder den bzw. der Stilelemente (24) angeordnet sein können.

7. Körper nach Anspruch 5, **dadurch gekennzeichnet,** daß die Verbinder (23) im Verhältnis zur vertikalen Symmetrieachse des Körpers symmetrisch angeordnet sind.

8. Körper nach einem der vorherigen Ansprüche, **dadurch gekennzeichnet,** daß er eine Stütze (14') für die Steuertafel (14) trägt.

## Claims

1. A body for a heating and/or air conditioning installation for the cabin of an automotive vehicle, comprising a housing containing treatment means (3, 12, 13) for treating air to be delivered to first outlet vents (6, 8) which are directed into the cabin, and to second outlet vents (10) which are directed on to the windscreen (5), with part (6) of the first outlet vents being rigidly and integrally joined to the housing, characterised in that it further includes additional first outlet vents (8), joined rigidly and integrally to the housing for delivering into the vide regions of the cabin, second outlet vents (10), and duct means (7, 9) for ducting air between the said housing and the said vents, whereby the assembly thus formed is of rigid and monobloc construction.

2. A body according to Claim 1, characterised in that it serves as a support for elements (14, 24, 25) of the vehicle.

3. A body according to Claim 1 or Claim 2, characterised in that it includes securing means (22) for securing styling elements (24) of the vehicle.

4. A body according to Claim 2 or Claim 3, characterised in that the securing means (22) are situated on the duct means (7, 9).

5. A body according to one of the preceding Claims, characterised in that it carries electrical connectors (23).

6. A body according to Claim 5, characterised in that the connectors are used for the connection of elements adapted to be disposed on and/or in the vicinity of the said body and/or styling elements (24).

7. A body according to Claim 5, characterised in that the connectors (23) are disposed symmetrically with respect to the vertical plane of symmetry of the body.

8. A body according to one of the preceding Claims, characterised in that it carries a support (14') for the control panel (14).

# FIG.1

# FIG.2

FIG.3

EP 0 291 397 B1